Europäisches Patentamt

European Patent Office

Office européen des brevets

(11) Publication number: **0 428 082 A2**

## EUROPEAN PATENT APPLICATION

(21) Application number: 90121493.2

(22) Date of filing: 09.11.90

(51) Int. Cl.5: **G06F 15/70**

(30) Priority: 15.11.89 JP 296677/89

(43) Date of publication of application:
22.05.91 Bulletin 91/21

(84) Designated Contracting States:
BE DE FR GB IT NL SE

(71) Applicant: EZEL INC.
2-22-2 Koishikawa
Bunkyo-ku Tokyo 112(JP)

(72) Inventor: Takatori, Sunao, c/o Ezel Inc.
2-22-2, Koishikawa, Bunkyo-ku
Tokyo 112(JP)

Inventor: Kumagai, Ryohei, c/o Ezel Inc.
2-22-2, Koishikawa, Bunkyo-ku
Tokyo 112(JP)
Inventor: Matsumoto, Koji, c/o Ezel Inc.
2-22-2, Koishikawa, Bunkyo-ku
Tokyo 112(JP)
Inventor: Yamamoto, Makoto, c/o Ezel Inc.
2-22-2, Koishikawa, Bunkyo-ku
Tokyo 112(JP)

(74) Representative: Patentanwälte Grünecker,
Kinkeldey, Stockmair & Partner
Maximilianstrasse 58
W-8000 München 22(DE)

(54) A 3-dimensional configuration recognition system.

(57) A 3-dimensional configuration recognition system comprising:
a means for projecting a checker pattern onto a surface of a solid object; a means for thinning said checker pattern and for generating a thinned checker pattern; a coupled of means for detecting 2-dimensional coordinate of said cross points; and a means for calculating 3-dimensional coordinate of said cross points from said 2-dimensional coordinate and positions of said couple of means.

Fig. 1

# A 3-DIMENSIONAL CONFIGURATION RECOGNITION SYSTEM

## FIELD OF THE INVENTION

The present invention relates to a 3-dimensional configuration recognition system for the recognition of a 3-dimensional surface.

## PRIOR ARTS

Conventionally, a system which obtains 3-dimensional coordinates of a surface of a solid from a light projected onto the surface, is known as a recognition system of a 3-dimensional configuration. In the above system, the light is emitted through slits and is moved over the surface. The location of the above light is detected by two cameras during this movement. The location of the light, i.e., 3-dimensional coordinates of the surface is calculated geometrically from the distance between 2 cameras and an angle formed with a line connecting the above cameras and a ray of light.

## SUMMARY OF THE INVENTION

As to such conventional 3-dimensional configuration recogni tion system, transit speed of a light should be lower than a predetermined value for accurate detection of the location of a light at the surface. Therefore, recognition speed is limited.

The present invention is invented in view of the above points of the prior art and has an object to provide a system recognizable of 3-dimensional configuration at a high speed.

A 3-dimensional configuration recognition system according to the present invention comprises:
a means for projecting a checker pattern onto a surface of a solid object;
a means for thinning said checker pattern and for generating a thinned checker pattern;
a means for extracting cross points of said thinned checker pattern;
a coupled of means for detecting 2-dimensional coordinate of said cross points; and
a means for calculating 3-dimensional coordinate of said cross points from said 2-dimensional coordinate and positions of said couple of means.

## BRIEF DESCRIPTION OF THE DRAWINGS

Fig.1 shows a flow chart showing the procedure of the recognition of the surface shape of a 3-dimensional configuration;
Fig.2 shows a squint diagram showing an example of a 3-dimensional configuration to be recognized;
Fig.3 shows a diagram showing the arrangement of cameras;
Fig.4 shows a diagram showing the branch point detection processing.
2.....Checker Pattern
3.....Cross Point

## PREFERRED EMBODIMENT OF THE PRESENT INVENTION

Hereinafter, an embodiment of the present invention is described with referring to the attached drawings.

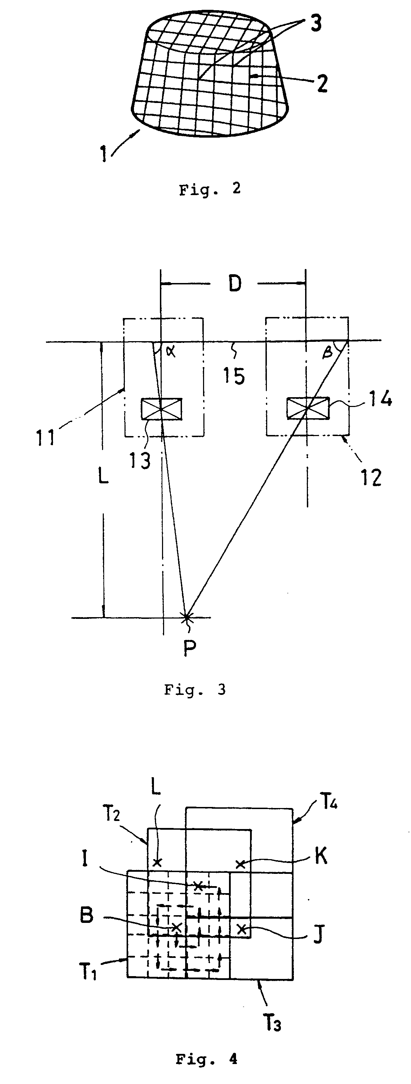

Fig.2 shows a truncated cone 1 as an example of a 3-dimensional configuration to be recognized. As it is described later, checker pattern 2 is projected onto the surface of the above truncated cone 1, according to the present embodiment. The surface shape of the above truncated cone 1 is recognized by calculating 3-dimensional coordinates of cross points of the above checker pattern 2.

Fig. 3 shows two typical cameras 11 and 12 for detecting 2-dimensional coordinate of cross points 3 on the surface. The above cameras form an image of a point P to be detected onto the screen 15 by the lenses 13 and 14. The relationship among the following lines and angles is as follows:
$$L \cot\alpha + L \cot\beta = D$$
where distance betwen centers of lenses 13 and 14 is D; distance from screen 15 to a point P is L; an angle formed with a line connecting a center point of a lens 13 and a point P and a side of the screen 15 is $\alpha$; and an angle formed with a line connecting a center point of a lens 14 and a point P and a side of the screen 15 is $\beta$. Then distance L is calculated by the following formula:
$$L = D / (\cot\alpha + \cot\beta) \qquad (1)$$
This distance L is used at step 62 for detecting 3-dimensional coordinates, as it is described hereinafter.

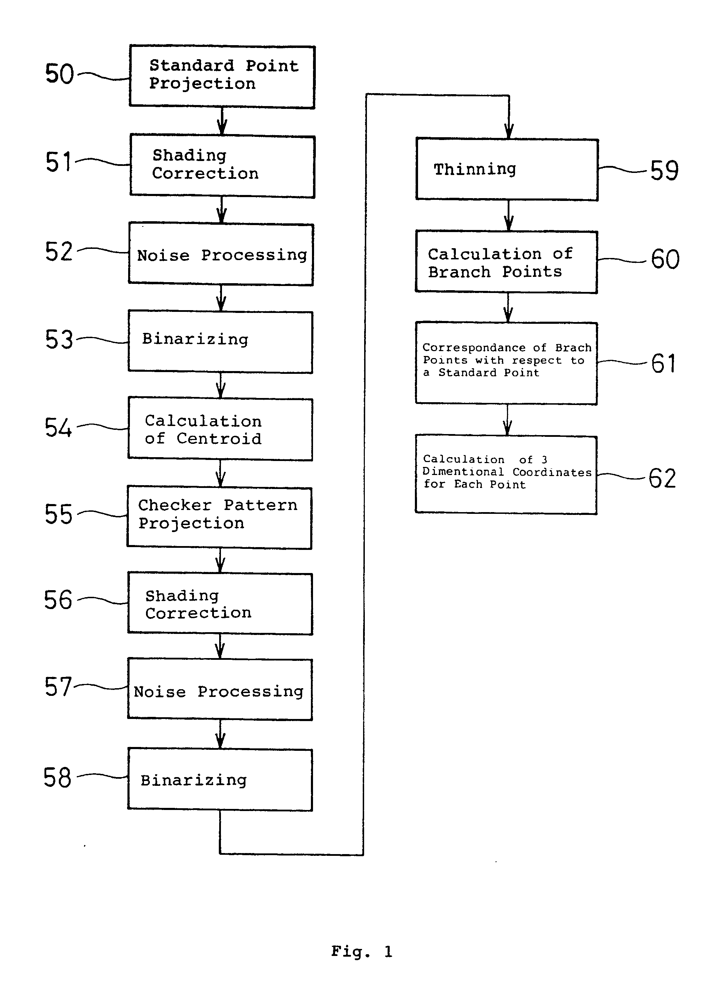

Fig.1 shows the procedure for the recognition of the configuration of the surface.

At step 50, a black spot is projected as a reference point onto the surface to be recognized. This reference point is used for obtaining 3-dimensional coordinates of each point on the surface at step 61.

At step 51, shaping correction is performed for the image obtained by cameras 11 and 12. Shading correction is performed so as to unify the luminance distribution of the whole image, as is generally known. Input image is segmented into a plurality of areas and optimized thresholds are

calculated for each area so that the imae has equivalent luminance as a whole.

At step 52, smoothing processing, i.e., median filter, etc., is performed so as to perform noise processing with preserving edges. As the result, noises of an image is deleted without dulling edge. Such image is binarized at step 53 so that numerical value of "1" of "0" is given to all pixels as their luminance.

At step 54, the coordinate of a centroid of a spot projected onto the reference point is calculated for detecting the position of the reference point obtained at step 50. This position of the centroid is calculated, as is generally known, by dividing the moment around the predetermined point of a spot by the area of the spot.

At step 55, checker pattern is projected onto the surface of the solid. This checker pattern is formed, for example, by a meshed material in front of an iluminant and projecting the mesh pattern onto the surface. That is, this checker pattern is drawn with black lines onto the surface.

Shading correction is performed for the above obtained checker pattern at step 56, and noise reduction and binarizing are performed at step 57 and 58, respectively. Here processings performed at steps 56, 57 and 58 are the same as that of steps 51, 52 and 53.

At step 59, thinning is performed for the checker pattern obtained from the processings up to steps 58. A configuration is converted into a line configuration with one pixel width by the above thinning.

At step 60, branch points are extracted from the thinned checker pattern. These branch points are extracted through, for example, evaluating eight pixels surrounding a center pixel with pixel value of "1" in the convolution of a size of 3x3.

At step 61, relationship between each point to the reference point is obtained. This is fully described with referring Fig.4.

First, a convolution T1 is taken into a consideration with its center on the reference point B, arranging 5 pixels in vertical direction and 5 pixels in horizontal direction. Two cameras 11 and 12 (refer to Fig. 3) detect branch points on the above convolution T1, as examining each pixel successively in a spiral order, staring from the reference point B, as shown by an arrow in Fig.4. The locations of branch points detected by each camera 11, 12 are stored in a memory, which is not shown in the figure, as the relative location to the reference point B. That is, two cameras 11 and 12 define the relationship between equivalent points to each other.

Next, a 5x5 convolution T2 is taken into a consideration as described above, with its center of a branch point I which has already been detected.

According to this convolution T2, branch points are detected by examining pixels successively in a spiral order. Here it is assumed that there are 4 branch points I, J, K and L, fro which branch point J is detected first. In this case, the same branch point detection with respect to the next convolution T3 centering the branch point J is repeatedly performed. When any new branch point would not be discovered within the convolution T3, branch point detection with respect to the convolution T4 centering a branch point K in the convolution T2 is performed. On the other hand, when no branch point is detecté ed with respect to a 5x5 convolution, a 10x10 convolution is taken and same branch point detection is performed.

By repeating the above processing, branch point detection for all pixels is performed so that the locations of all branch points are to be stored in a memory.

At step 62, 3-dimensional coordinate for each branch point is calculated. According to step 61, the locations of each branch point detected by each camera 11, 12 are stored as the angles $\alpha$ and $\beta$ as shown in Fig.3. At step 62, distance L (Z coordinate) is calculated by inputting the values of the above angles $\alpha$ and $\beta$ into the above formula. On the other hand, x and y coordinates are simply calculated by detecting the locations of each pixel, since a plane (x-y plane) perpendicular to the direction of distance L is parallel to a screen 15, and is on the same plane as that of the above convolution.

Accordingly, x, y and z coordinates of each branch point, i.e., cross points of the checker pattern, are calculated so as to recognize the surface shape of a 3-dimensional configuration.

According to the present invention, as mentioned above, it is possible to obtain the advantage that a high speed recognition of 3-dimensional configuration becomes possible.

## Claims

(1) A 3-dmensional configuration recognition system comprising:
a means for projecting a checker pattern onto a surface of a solide object;
a means for thinning said checker pattern and for generating a thinned checker pattern;
a means for extracting cross points of said thinned checker pattern;
a couple of means for detecting 2-dimensional coordinate of said cross points; and
a means for calculating 3-dimensional coordinate of said cross points from said 2-dimensional coordinate and positions of said coupled of means.

50 — Standard Point Projection

51 — Shading Correction

52 — Noise Processing

53 — Binarizing

54 — Calculation of Centroid

55 — Checker Pattern Projection

56 — Shading Correction

57 — Noise Processing

58 — Binarizing

Thinning — 59

Calculation of Branch Points — 60

Correspondance of Brach Points with respect to a Standard Point — 61

Calculation of 3 Dimentional Coordinates for Each Point — 62

Fig. 1

Fig. 2

Fig. 3

Fig. 4